# EUROPÄISCHE PATENTANMELDUNG

(11) **EP 4 683 191 A1**
(43) Veröffentlichungstag der Anmeldung: **21.01.2026**
(21) Anmeldenummer: 24188615.9
(22) Anmeldetag: 15.07.2024
(51) Int. Cl.: H02K 41/03, H02K 1/14

(54) **SEGMENT FÜR EIN SEKUNDÄRTEIL EINES LINEARMOTORS, LINEARMOTOR**

(71) Anmelder: Siemens Aktiengesellschaft, 80333 München (DE)
(72) Erfinder: Sailer, Hermann, 85411 Hohenkammer (DE)
(74) Vertreter: Siemens Patent Attorneys

(57) **Zusammenfassung**

Die Erfindung betrifft ein Segment (1, 1B, 1C) für ein Sekundärteil (2) eines Linearmotors (10), aufweisend wenigstens ein Halteelement (13A, 13B, 13C) an einer ersten Seite (A) des Segments (1, 1B, 1C), wobei das wenigstens eine Halteelement (13A, 13B, 13C) an der ersten Seite (A) derart ausgebildet ist, dass es beim Zusammensetzen mit einem weiteren Segment (1, 1B, 1C) mit wenigstens einem Halteelement (12A, 12B, 12C, 12D) an einer zweiten Seite (B) des weiteren Segments (1, 1B, 1C) einen Steg zum Halten und/oder Fixieren eines Magneten (4, 6) bildet.

## Beschreibung

Die Erfindung betrifft ein Segment für ein Sekundärteil eines Linearmotors sowie einen Linearmotor.

Bei der Erzeugung elektromotorischer Kraft mit Linearmotoren werden vorzugsweise auf Oberflächen Magnete Anzugs- und Vortriebskräfte ausgeübt. Meist werden diese flachen Magnete entsprechend der gewünschten Polteilung auf Stahlplatten oder Blechpaketen festgeklebt.

Zusätzlich kann der umgebende Magnetraum durch Vergussmaterial aufgefüllt werden. Dadurch erhalten die einzelnen Magnete als auch der Magnetverbund eine zusätzliche Kompaktierung und Bindung an den Träger.

Um die Beanspruchbarkeit der Befestigung zu erhöhen, werden hochfeste Klebstoffe und Vergussmassen eingesetzt.

Der Einsatz von Permanentmagneten erfordert jedoch ein sofortiges Fixieren der Montageposition. Während der längeren Härtezeit dieser höherfesten Klebstoffe bleiben Haltevorrichtungen vorzugsweise gebunden. Das Aufrauen oder Strukturierung der Klebeflächen zur Festigkeitssteigerung ist kostenaufwändig.

Eben aus diesen wirtschaftlichen wie auch aus logistischen Gründen, wird meist, da die Sekundärteilspur um ein Vielfaches länger ist als die Primärteilspur, die Sekundärteilspur aus einzelnen Segmenten gefertigt. Allerdings ist hierbei eine sichere Befestigung der Oberflächenmagnete auf den flachen Trägerplatten, die segmentiert als Sekundärteilspur bei einem Synchron-Linearmotor fungieren, problembehaftet.

Der Erfindung liegt die Aufgabe zugrunde dies zu verbessern.

Die Lösung der Aufgabe gelingt durch Anspruch 1, d. h. ein Segment für ein Sekundärteil eines Linearmotors, aufweisend wenigstens ein Halteelement an einer ersten Seite des Segments, wobei das wenigstens eine Halteelement an der ersten Seite derart ausgebildet ist, dass es beim Zusammensetzen mit einem weiteren Segment mit wenigstens einem Halteelement an einer zweiten Seite des weiteren Segments einen Steg zum Halten und/oder Fixieren eines Magneten bildet.

Vorzugsweise ist dieser gebildete Steg wenigstens im Wesentlichen durchgängig.

Vorteilhaft ist ferner eine Ausführung, wonach das Halteelement an der ersten Seite bezüglich des Halteelements an der zweiten Seite des weiteren Segments wechselständig angeordnet ist.

Eine wechselständige Anordnung des Halteelements an der ersten Seite und des Halteelements an der zweiten Seite schafft insbesondere einen durchgängigen Steg.

Vorzugsweise sind die einzelnen Segmente baugleich.

Vorteilhaft ist zudem eine Ausführung, wonach das Halteelement an der ersten Seite des Segments derart ausgebildet ist, dass es beim Zusammensetzen mit dem weiteren Segment mit wenigstens einem Halteelement an der zweiten Seite des weiteren Segments per Formschluss einen Steg zum Halten und/oder Fixieren eines Magneten bildet.

In einer vorteilhaften Ausführungsform sind an der ersten Seite mehrere Halteelemente ausgebildet.

Vorzugsweise sind an der zweiten Seite mehrere Halteelemente ausgebildet.

Vorteilhaft ist eine Ausführung, wonach an der ersten Seite mehrere Halteelemente ausgebildet sind, wobei die Halteelemente an der ersten Seite bezüglich des Halteelements oder der Haltelemente an der zweiten Seite des weiteren Segments wechselständig angeordnet sind.

Die Halteelemente der ersten Seite des einen Segments und die Halteelemente der zweiten Seite des weiteren Segments greifen vorzugsweise ineinander und verbinden sich insbesondere mittels Formschluss. Die Ausbildung von mehreren über die Seite verteilten Halteelementen hat den Vorteil, dass ein Magnet auch ohne Verbindung mit einem weiteren Segment gut gehalten und fixiert ist.

Ein Halteelement ragt vorteilhaft über die Oberseite des Segments hinaus. Auf diese Weise kann ein gutes Halten des Magneten erreicht werden.

Vorteilhaft ist ebenso eine einstückige Ausbildung des Halteelements und des Segments.

Die Lösung der Aufgabe gelingt ferner durch ein Sekundärteil, aufweisend eine Mehrzahl an derartigen Segmenten.

Vorteilhaft ist eine Ausführung, wonach auf einer Oberseite wenigstens eines Segments wenigstens ein Magnet angeordnet ist.

Auf der Oberseite der Segmente sind vorzugsweise mehrere Magnete angeordnet. Diese können auch zusätzlich angeklebt sein.

Die Magnete sind vorzugsweise derart auf dem Segment angeordnet, dass sie einen Formschluss mit dem wenigstens einen Haltelement bezüglich der Hauptbelastungsrichtung haben. So kann eine gute Fixierung erreicht werden.

Ein reiner Kraftschluss durch Festkleben auf planen Oberflächen ist nicht so robust gegenüber Prozesskräften sowie Stoß- und Vibrationsbelastungen, wie der beschriebene Formschluss.

Allerdings kann zusätzlich ein Festkleben von Vorteil sein und sich bezüglich der Belastung der Magnete positiv auswirken.

Allerdings kann die Klebung auch ganz entfallen und somit auch ein Vorbehandeln der Klebeflächen, durch beispielsweise Sandstrahlen, dass sie eine spezielle Rauheit erhalten.

Die Erfindung bietet zudem den Vorteil, dass die Herstellung der Sekundärteile leichter mit vormagnetisierten Magneten bewerkstelligt werden kann, da von Anfang an durch die gebildeten Stege an den Verbindungstellen zweier Segmente eine Fixierung vorhanden ist.

Ferner weist, wie auch später in den Figuren gezeigt, ein Segment vorteilhaft zusätzlich mehrere Stege zur Fixierung der Magnete auf.

Die Erfindung ist von Vorteil, da dadurch Zeit und Aufwand eingespart werden. Durch die Stege bzw. die Halteelemente am Ende des Segments wird eine Positionierung der Magnete exakt.

Die Stege sowie die Halteelemente können beispielsweise mit CNC gesteuerten Werkzeugmaschinen aus einem Block ausgefräst werden.

Die Genauigkeit hinsichtlich einer Magnetausrichtung wird zudem verbessert, eine geringere Positionsabweichung zeigt sich in höherer Kraftausbeute und besserer Regelgüte eines Linearmotors.

Die Erfindung betrifft zudem einen Linearmotor, aufweisend eine Mehrzahl an derartigen Segmenten.

Die Erfindung betrifft zudem einen Linearmotor, aufweisend ein derartiges Sekundärteil.

Im Folgenden wird die Erfindung anhand der in den Figuren dargestellten Ausführungsbeispielen näher beschrieben und erläutert. Darin zeigen:
- FIG 1: einen Linearantrieb mit einem Sekundärteil,
- FIG 2: ein Segment mit einer Mehrzahl an Stegen und Haltelementen,
- FIG 3: das in FIG 2 gezeigte Segment, bestückt mit Magneten,
- FIG 4: das Ineinandergreifen der äußersten Halteelemente.

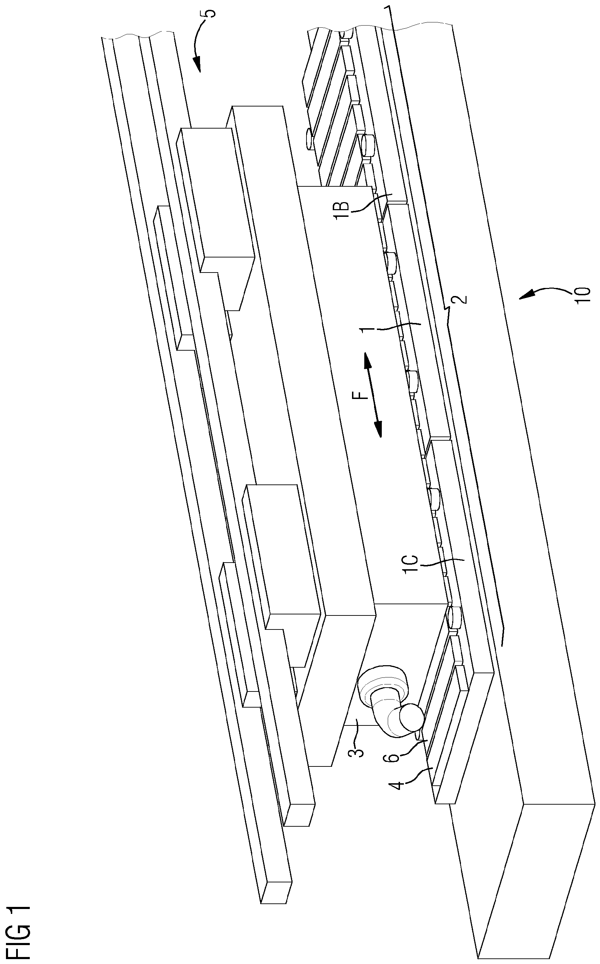

FIG 1 zeigt einen Linearantrieb 10, aufweisend ein Sekundärteil 2.

Das Sekundärteil 2 weist vorzugsweise eine Mehrzahl an Segmenten 1, 1B und 1C auf. Auf einer Oberseite eines Segments 1 sind Magnete 4 und 6 angeordnet.

Die Figur zeigt ferner ein Primärteil 3 sowie einen Schlitten 5. Die Kraft ist mit F dargestellt.

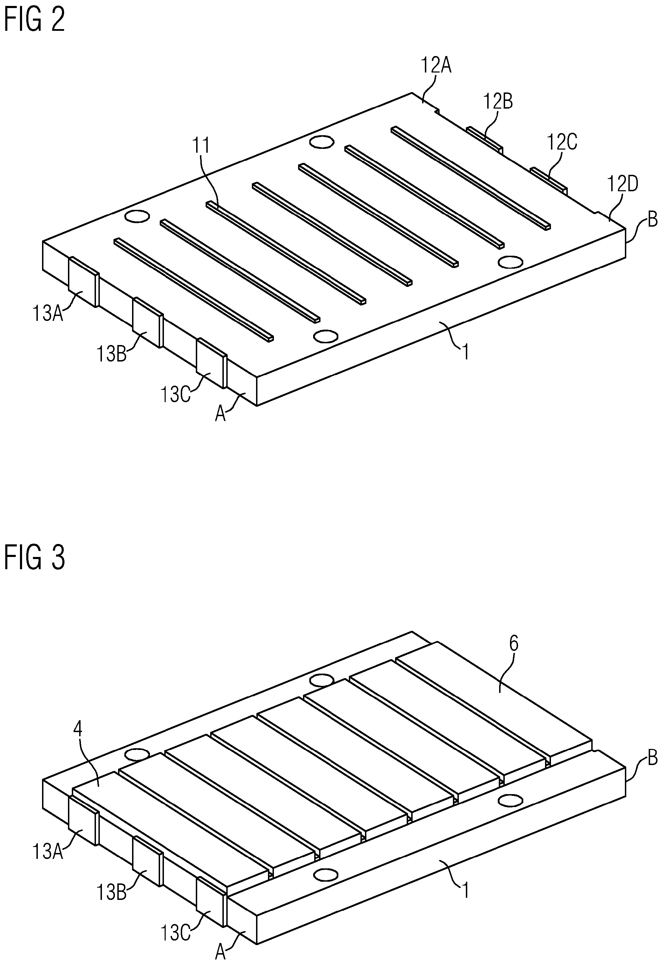

FIG 2 zeigt ein Segment 1.

Dieses weist eine Mehrzahl an Stegen 11 auf. An einer ersten Seite A sind die Elemente 13A, 13B und 13C angeordnet. An einer zweiten Seite B sind die Elemente 12A, 12B, 12C und 12D angeordnet.

Diese ragen vorzugsweise über eine Oberseite des Segments 1 hinaus.

Vorteilhaft ist ferner eine Ausführung, wonach der Teil der Elemente 13A, 13B, 13C bzw. 12A, 12B, 12C, 12D, der über die Oberseite des Segments 1 wenigstens im Wesentlichen in gleicher Höhe hinausragt, wie ein Steg 11 hinausragt.

Die Stege 11 sind zum Halten und/oder Fixieren von Permanentmagneten 4 und 6 ausgebildet.

Der Bereich zwischen zwei Stegen 11 ist zur Aufnahme von Magneten ausgebildet. Die Elemente 13A, 13B, 13C und 12A, 12B, 12C, 12D sind, wie in der Figur gezeigt, vorzugsweise wechselständig angeordnet, insbesondere derart, dass beim Zusammensetzen eines Segments 1 mit einem Segment 1C (siehe FIG 1) die Elemente an der ersten Seite A des Elements 1 13A, 13B, 13C mit den an der zweiten Seite des Segments 1C angeordneten Elementen 12A, 12B, 12C, 12D einen Steg 11, vorzugsweise einen durchgehenden Steg, bilden.

FIG 3 zeigt das in FIG 2 gezeigte Segment 1 bestückt mit Magneten 4 und 6.

Durch die Elemente 13A, 13B, 13C wird die letzte Magnetreihe 4, also die Magnetreihe, die an der ersten Seite A angrenzt, fixiert bzw. gehalten. Dadurch dass beim Zusammensetzen mit einem weiteren vorteilhaft baugleichen Segment 1 ein wenigstens im Wesentlichen durchgehender Steg 11 erreicht wird, wird die Magnetreihe 4 besonders gut gehalten, wie auch eine Magnetreihe 6, die auf dem hinzugefügten Segment 1B (siehe FIG 1) an der zweiten Seite angeordnet ist.

Dadurch dass die Elementgruppen ineinandergreifen wird kein unnötiger Bauraum benutzt und die Magnete können eng aneinander liegen. Es ergibt sich vorteilhaft kein Unterschied bezüglich des Abstands von den Magneten, der durch die Stege 11 begründet ist.

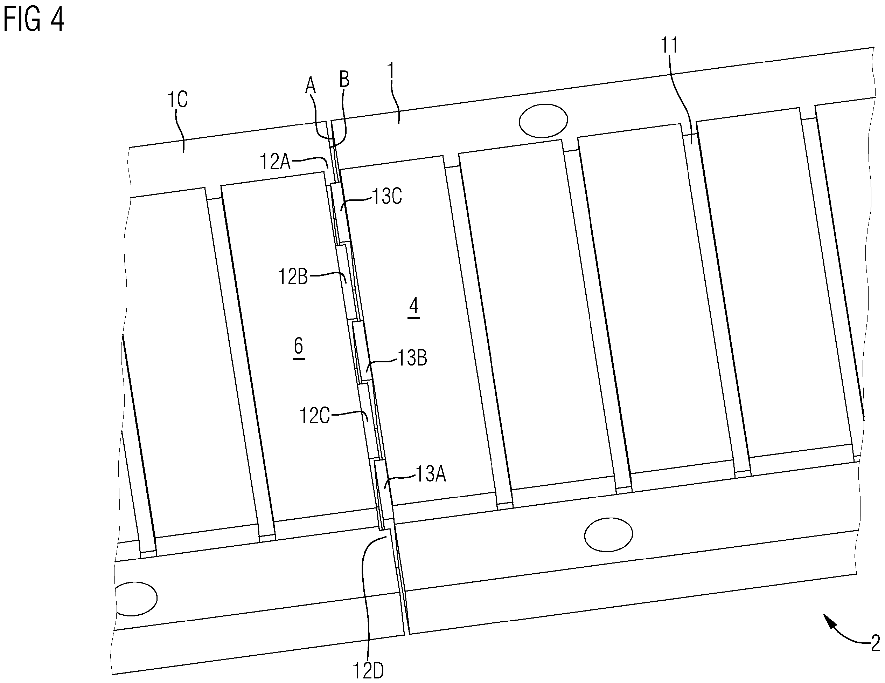

Das Ineinandergreifen der äußersten Halteelemente ist in FIG 4 dargestellt. Dort ist ein Sekundärteil 2 gezeigt, insbesondere ein Ausschnitt aus dem Verbindungsbereich der Segmente 1und 1C. Die Elemente 12A, 12B, 12C, 12D und die Elemente 13A, 13B, 13C greifen derart ineinander, dass sie einen Steg bilden, so können die Magnete gut gehalten werden und es wird kein Bauraum unnötig als Fixierhilfe verwendet.

## Patentansprüche

1. Segment (1, 1B, 1C) für ein Sekundärteil (2) eines Linearmotors (10), aufweisend wenigstens ein Halteelement (13A, 13B, 13C) an einer ersten Seite (A) des Segments (1, 1B, 1C), wobei das wenigstens eine Halteelement (13A, 13B, 13C) an der ersten Seite (A) derart ausgebildet ist, dass es beim Zusammensetzen mit einem weiteren Segment (1, 1B, 1C) mit wenigstens einem Halteelement (12A, 12B, 12C, 12D) an einer zweiten Seite (B) des weiteren Segments (1, 1B, 1C) einen Steg zum Halten und/oder Fixieren eines Magneten (4, 6) bildet.

2. Segment (1, 1B, 1C) nach Anspruch 1, wobei das Halteelement (13A, 13B, 13C) an der ersten Seite (A) bezüglich des Halteelements (12A, 12B, 12C, 12D) an der zweiten Seite (B) des weiteren Segments (1, 1B, 1C) wechselständig angeordnet ist.

3. Segment (1, 1B, 1C) nach einem der vorhergehenden Ansprüche, wobei das Halteelement (13A, 13B, 13C) an der ersten Seite (A) des Segments (1, 1B, 1C) derart ausgebildet ist, dass es beim Zusammensetzen mit dem weiteren Segment (1, 1B, 1C) mit wenigstens einem Halteelement (12A, 12B, 12C, 12D) an der zweiten Seite (B) des weiteren Segments (1, 1B, 1C) per Formschluss einen Steg zum Halten und/oder Fixieren eines Magneten (4, 6) bildet.

4. Segment (1, 1B, 1C) nach einem der vorhergehenden Ansprüche, wobei an der ersten Seite (A) mehrere Halteelemente (13A, 13B, 13C) ausgebildet sind, wobei die Halteelemente (13A, 13 B, 13C) an der ersten Seite (A) bezüglich des Halteelements oder der Haltelemente (12A, 12B, 12C, 12D) an der zweiten Seite (B) des weiteren Segments (1, 1B, 1C) wechselständig angeordnet sind.

5. Segment (1, 1B, 1C) nach einem der vorhergehenden Ansprüche, wobei das Segment (1, 1B, 1C) und das wenigstens eine Haltelement (12A... D, 13A... C) einstückig ausgebildet sind.

6. Sekundärteil (2), aufweisend eine Mehrzahl an Segmenten (1, 1B, 1C) nach einem der vorhergehenden Ansprüche.

7. Sekundärteil (2) nach Anspruch 6, wobei auf einer Oberseite wenigstens eines Segments (1, 1B, 1C) wenigstens ein Magnet (4, 6) angeordnet ist.

8. Sekundärteil (2) nach einem der vorhergehenden Ansprüche, wobei der wenigstens eine Magnet (4, 6) derart auf dem Segment (1, 1B, 1C) angeordnet ist, dass er einen Formschluss mit wenigstens einem Haltelement (12A... D, 13A... C) bezüglich einer Hauptbelastungsrichtung hat.

9. Linearmotor (10), aufweisend ein Sekundärteil (2) nach einem der Ansprüche 6 bis 8.
